# NEUE EUROPÄISCHE PATENTSCHRIFT

(11) **EP 0 511 523 B2**
(45) Veröffentlichungstag und Bekanntmachung des Hinweises auf die Entscheidung über den Einspruch: **29.09.1999**
(45) Hinweis auf die Patenterteilung: 17.01.1996
(21) Anmeldenummer: 92105947.3
(22) Anmeldetag: 07.04.1992
(51) Int. Cl.: C09B 62/09, C09B 62/513, D06P 1/38

(54) **Azofarbstoffe mit mehreren reaktiven Ankergruppen**
Azo dyes with several reacting groups
Colorants azo ayant plusieurs groupes d'ancrage réactifs

(30) Priorität: 27.04.1991 DE 4113838
(43) Veröffentlichungstag der Anmeldung: 04.11.1992
(73) Patentinhaber: BASF Aktiengesellschaft, 67063 Ludwigshafen (DE)
(72) Erfinder: Loeffler, Hermann, W-6720 Speyer (DE); Patsch, Manfred, Dr., W-6706 Wachenheim (DE)

(56) Entgegenhaltungen:
- EP-A- 0 387 579
- EP-A- 0 387 589
- DE-A- 3 320 972
- GB-A- 2 007 698
- JP-A- 6 069 163

## Beschreibung

Die vorliegende Erfindung betrifft neue Reaktivfarbstoffe der Formel Ia 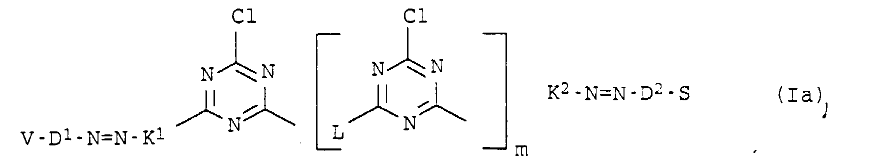 in der
- m: 0 oder 1,
- V: 2-Chlorethylsulfonyl oder einen 2-Hydroxyethylsulfonylrest, der mit anorganischen oder organischen Säuren verestert ist und unter Färbebedingungen den Vinylsulfonylrest ergibt, und
- S: einen substitutiv reagierenden faserreaktiven Rest bedeuten und
D¹ und D² gleich oder verschieden sind und unabhängig voneinander jeweils gegebenenfalls substituiertes Phenylen, gegebenenfalls substituiertes Phenylenmethyl, gegebenenfalls substituiertes Naphthylen oder gegebenenfalls substituiertes Naphthylenmethyl,
K¹ und K² gleich oder verschieden sind und unabhängig voneinander jeweils den Rest einer Kupplungskomponente aus der Aminonapthalinsulfonsäurereihe und
L ein Brückenglied bedeuten, Reaktivfarbstoffe der Formel Ib 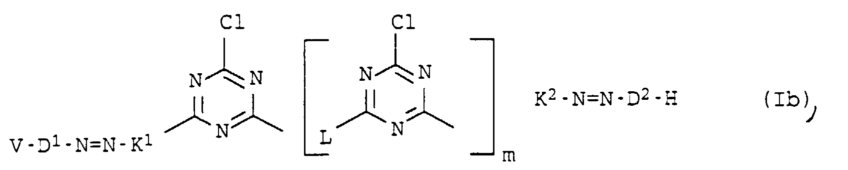 in der
- V: einen 2-Hydroxyethylsulfonylrest, der mit anorganischen oder organischen Säuren verestert ist und unter Färbebedingungen den Vinylsulfonylrest ergibt, bedeutet und
mit der Maßgabe, daß der Farbstoff der Formel 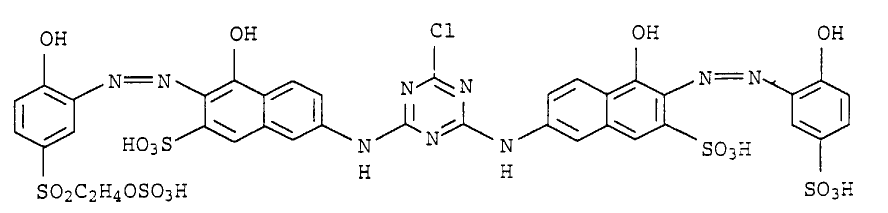 ausgenommen ist und
Reaktivfarbstoffe der Formel Ic 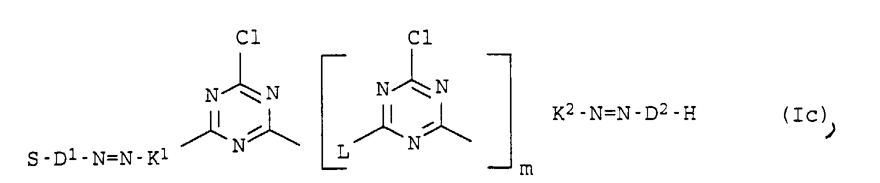 in der
- S: einen substitutiv reagierenden faserreaktiven Rest bedeutet,
sowie ihre Verwendung zum Färben oder Bedrucken von Hydroxygruppen oder Stickstoffatome aufweisenden organischen Substraten.

In der JP-A-69 163/1985 sind Reaktivfarbstoffe beschrieben, die sich von denen der Formel I darin unterscheiden, daß die laser reaktiven Reste jeweils einen kombinierten Doppelankerrest auf Basis des Monochlortriazinylankers und des 2-Sulfatoethylsulfonylankers bedeuten. Es hat sich gezeigt, daß diese Farbstoffe noch anwendungstechnische Mängel aufweisen. Sie zeigen beispielsweise entweder mangelhafte Beständigkeit gegen alkalische und/oder peroxidhaltige Waschmittel oder sie fixieren bei der üblichen Färbetemperatur mit zu geringer Farbausbeute (siehe J. Soc. Dyers Col. Vol. 104, S. 425-431, 1988).

Auch die aus der DE-A-1 265 698, DE-A-2 748 965 oder DE-A-2 748 975 bekannten Farbstoffe, die über drei oder vier Ankergruppen auf Basis des Monochlortriazinylankers und des Vinylsulfonylankers verfügen, weisen Mängel auf. So sind sie wenig alkalistabil und nur mäßig echt gegenüber peroxidhaltigen Waschmitteln.

Schließlich sind die in der JP-A-40 686/1977 und JP-A-27 628/1978 beschriebenen Farbstoffe, die vier Anker auf Basis des Monochlortriazinylankers aufweisen, sehr reaktionsträge. Dies bedeutet, daß bei ihrer Applikation entweder eine hohe Färbetemperatur oder aber eine lange Färbezeit benötigt wird.

Aufgabe der vorliegenden Erfindung war es, neue Reaktivfarbstoffe auf Basis von Azofarbstoffen bereitzustellen, die über mehrere reaktive Gruppen verfügen. Die neuen Farbstoffe sollten eine hohe Stabilität gegenüber Alkali und oxidierenden Waschmitteln besitzen und eine günstige Reaktivität im Färbebad aufweisen.

Demgemäß wurden die eingangs näher bezeichneten Reaktivfarbstoffe der Formeln Ia, Ib und Ic gefunden.

Faserreaktive Reste sind solche, die mit den Hydroxygruppen oder Stickstoffatome enthaltenden Gruppen. der zu behandelnden Substrate, gegebenenfalls in Gegenwart von Protonenacceptoren, substitutiv oder additiv reagieren.

Geeignete substitutiv reagierende faserreaktive Reste sind z.B. halogensubstituierte Reste von 1,3,5-Triazin, Chinoxalin, Phthalazin, Pyrimidin oder Pyridazon, oder der 2-Alkylsulfonylbenzthiazolrest.

Beispielhaft seien folgende Reste V und S genannt:
-SO₂-C₂H₄OSO₃H, -SO₂-C₂H₄OPO₃H₂, -SO₂-C₂H₄OCOCH₃, -SO₂-C₂H₄-Cl, 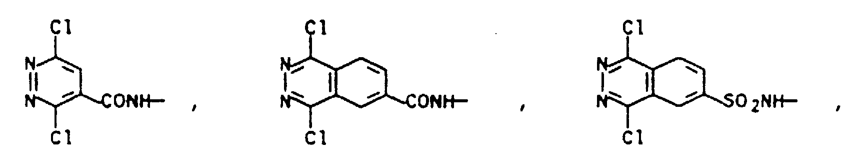 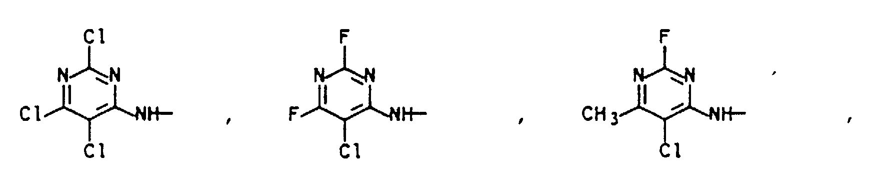 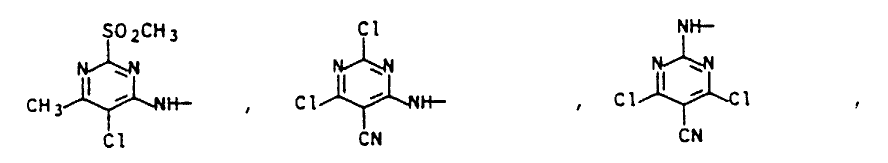 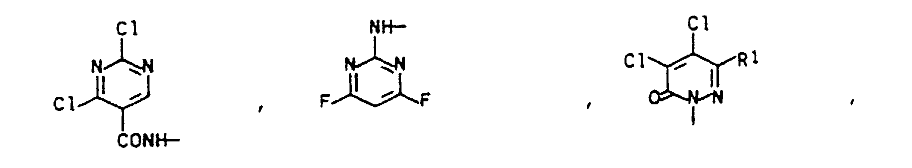 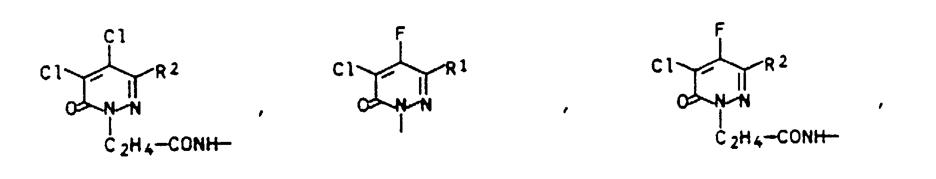 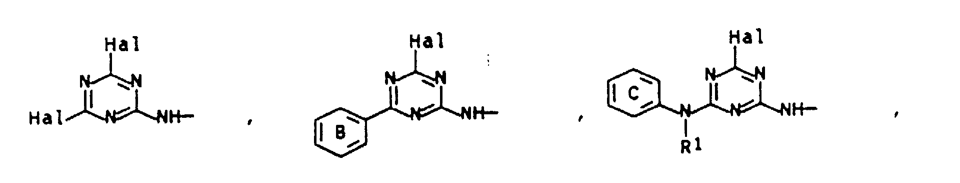 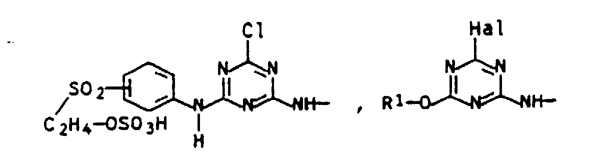 oder 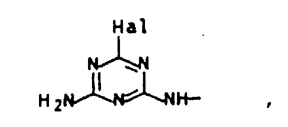 wobei Hal Fluor oder Chlor, R¹ C₁-C₆-Alkyl, das gegebenenfalls durch ein oder zwei Sauerstoffatome in Etherfunktion unterbrochen ist, und R² Wasserstoff oder Nitro bedeuten und die Ringe B und C durch Hydroxysulfonyl und/oder Carboxyl einfach oder zweifach substituiert und der Ring C davon unabhängig noch durch Chlor, Nitro, Methoxy oder Methyl substituiert sein können.

Die Reste D¹ und D² bedeuten gegebenenfalls substituiertes Phenylen, gegebenenfalls substituiertes Phenylenmethyl, gegebenenfalls substituiertes Naphthylen oder gegebenenfalls substituiertes Naphthylenmethyl. Als Substituenten können z.B. Hydroxysulfonyl. Carboxyl, C₁-C₄-Alkyl, C₁-C₄-Alkoxy, gegebenenfalls durch Hydroxysulfonyl und Nitro substituiertes Styryl oder gegebenenfalls durch C₁-C₄-Alkyl und Hydroxysulfonyl substituiertes Benzthiazoiyi in Betracht kommen. Wenn die Reste D¹ oder D² substituiert sind, weisen sie in der Regel 1 bis 3 Substituenten auf.

Reste D¹ und D² sind z.B. 1,3- oder 1,4-Phenylen oder ein Rest der Formel 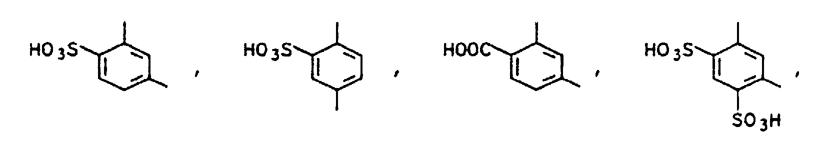 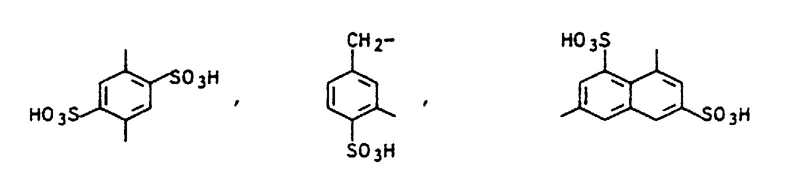 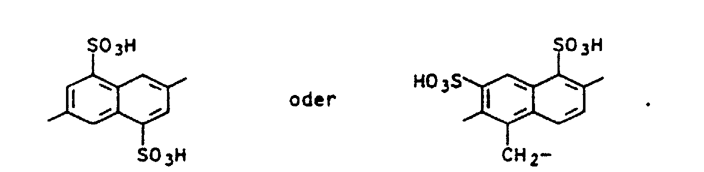 Wenn A² Wasserstoff bedeutet, sind geeignete Reste D²-H weiterhin z.B. Phenyl oder ein Rest der Formel

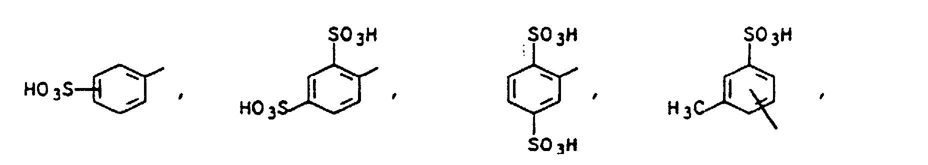

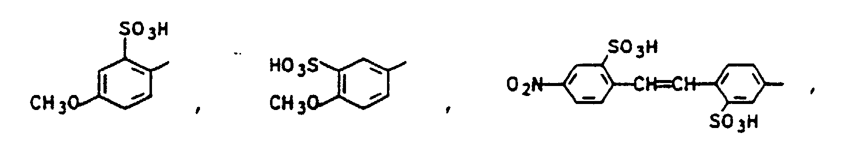

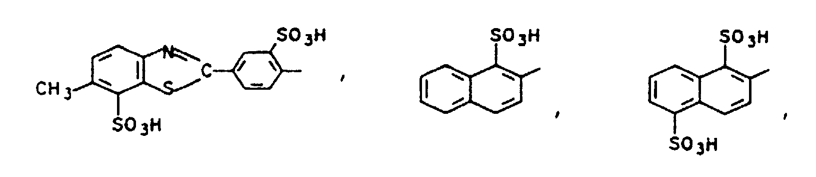

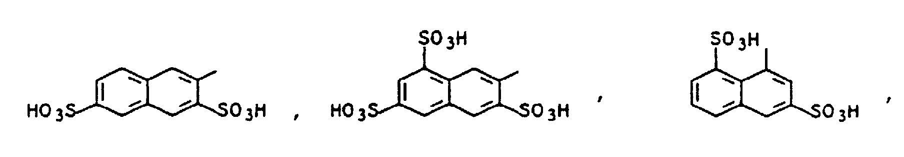

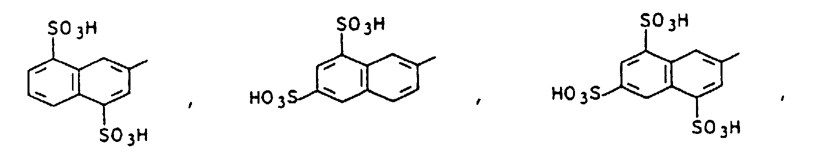

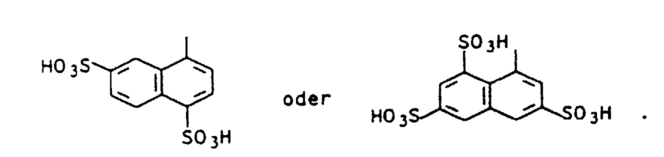

Die Reste K¹ und K² leiten sich von einer Kupplungskomponente aus der Aminonaphthalinsulfonsäurereihe ab. Geeignete Kupplungskomponenten entsprechen z.B. der Formel II 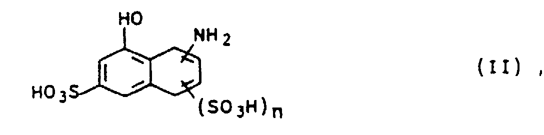 in der n 0 oder 1 bedeutet.

Beispielhaft sind folgende Komponenten genannt:

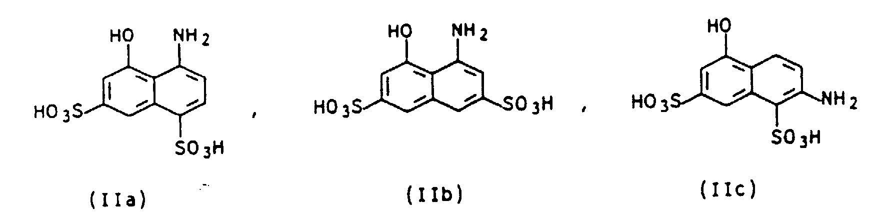

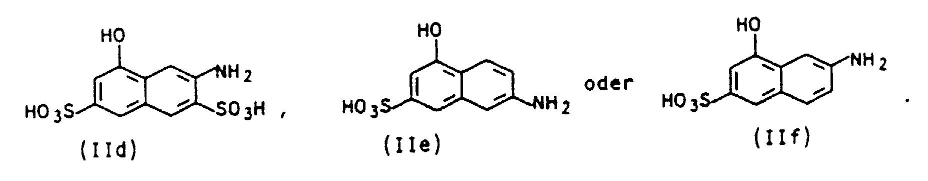

Geeignete Brückenglieder L gehorchen z.B. der Formel 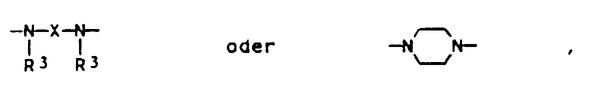 wobei
- R³: Wasserstoff oder C₁-C₄-Alkyl und
- X: C₂-C₆-Alkylen oder den obengenannten Rest D¹ bedeuten.

Bevorzugt sind Reaktivfarbstoffe der Formel I, in der m 0 bedeutet.

Weiterhin bevorzugt sind Reaktivfarbstoffe der Formel I, in der die Reste D¹ und D² unabhängig voneinander gegebenenfalls ein- oder zweifach durch Hydroxysulfonyl substituiertes Phenylen oder gegebenenfalls ein- bis dreifach durch Hydroxysulfonyl substituiertes Naphthylen bedeuten.

Besonders bevorzugt sind Reaktivfarbstoffe der Formel Ia, Ib oder Ic, in der
- V: den Rest SO₂-C₂H₄-OSO₃H und
- S: den Rest 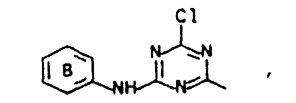
worin der Ring B ein- oder zweifach durch Hydroxysulfonyl substituiert sein kann, bedeuten.

Besonders hervorzuheben sind Reaktivfarbstoffe der Formel Ia, Ib oder Ic, worin K¹ den Rest der Formel lla und K² einen Rest der Formel IIb, IIc, IId, IIe oder IIf bedeuten.

Besonders hervorzuheben sind weiterhin Reaktivfarbstoffe der Formel Ia, Ib oder Ic, worin K¹ einen Rest der Formel IIb, IIc, IId, lle oder IIf und K² den Rest der Formel IIa bedeuten.

Besonders hervorzuheben sind weiterhin Reaktivfarbstoffe der Formel Ia, Ib oder Ic, worin K¹ einen Rest der Formel IIa oder IIb und K² einen Rest der Formel IIa oder IIb bedeuten.

Insbesondere hervorzuheben sind Reaktivfarbstoffe der Formel Ia, Ib oder Ic, worin K¹ den Rest der Formel IIa und K² einen Rest der Formel IIb, IIe oder IIf oder K¹ und K² gleichzeitig einen Rest der Formel IIa oder IIb bedeuten.

Von besonderer Bedeutung sind Reaktivfarbstoffe der Formel Ia, Ib oder Ic, worin K¹ den Rest der Formel IIa und K² den Rest der Formel IIb oder K¹ und K² gleichzeitig einen Rest der Formel IIa oder llb bedeuten.

Die Herstellung der erfindungsgemäßen Reaktivfarbstoffe der Formel I kann nach an sich bekannten Methoden erfolgen. Beispielsweise kann man ein Amin der Formel IIIa

A¹-D¹-NH₂ (IIIa),

in der A¹ einen faserreaktiven Rest V oder S und D¹ jeweils die obengenannte Bedeutung besitzen, in wäßrig mineralsaurem Medium diazotieren und anschließend bei einem pH-Wert von ca. 4 bis 8 mit einem Naphthalintriazinderivat der Formel IV 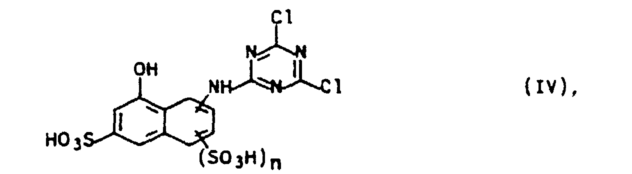 in der n die obengenannte Bedeutung besitzt, kuppeln.

Das resultierende Zwischenprodukt der Formel V 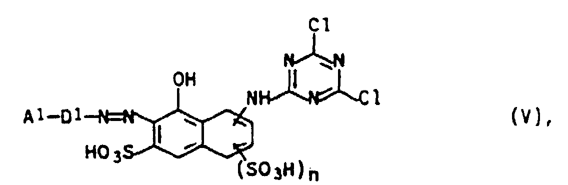 in der A¹, D¹ und n jeweils die obengenannte Bedeutung besitzen, kann dann (für den Fall, daß m 0 bedeutet) mit einer Naphthalinverbindung der obengenannte Formel II bei einem pH-Wert von ca. 4 bis 6 und einer Temperatur von 0 bis 40°C zum Folgeprodukt der Formel VI 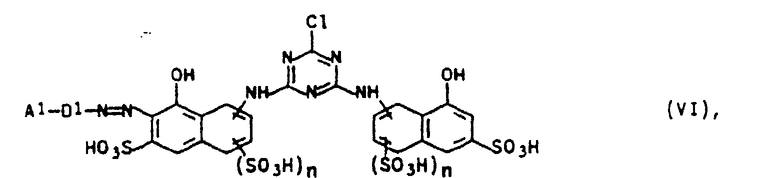 in der A¹, D¹ und n jeweils die obengenannte Bedeutung besitzen, umgesetzt werden.

In der letzten Stufe erfolgt dann die Kupplung des Folgeprodukts VI mit dem Diazoniumsalz eines Amins der Formel IIIb

A²-D²-NH₂ (IIIb),

in der A² einen faserreaktiven Rest V oder S oder Wasserstoff und D² jeweils die obengenannte Bedeutung besitzen, wobei der Farbstoff der Formel VII 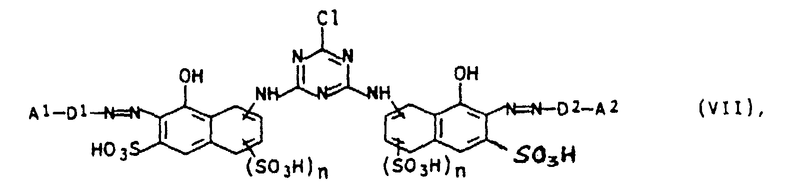 in der A¹, A², D¹, D² und n jeweils die obengenannte Bedeutung besitzen, entsteht.

Die Synthese des Farbstoffs VII ist auch in umgekehrter Reihenfolge möglich und ausgesprochen vorteilhaft. wenn die Elektrophilie des Diazoniumsalzes des Amins Illb höher ist als die des Diazoniumsalzes des Amins IIIa.

Zur Herstellung von solchen Farbstoffen, in denen m 1 bedeutet. kann man das Zwischenprodukt V bei einem pH-Wert von ca. 4 bis 8 und einer Temperatur von 0 bis 40°C mit einem Äquivalent eines Diamins der Formel VIII

H-L-H (VIII),

in der L die obengenannte Bedeutung besitzt, umsetzen und die resultierende Folgeverbindung der Formel IX 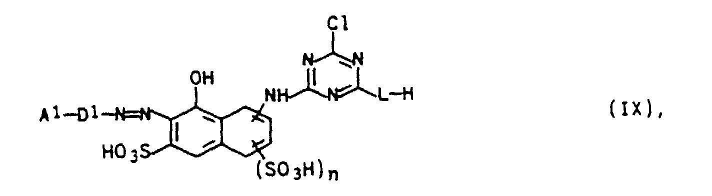 in der A¹, D¹, L und n jeweils die obengenannte Bedeutung besitzen, entweder unter den obengenannten Bedingungen mit einem weiteren Äquivalent Naphthalintriazinderivat IV oder schrittweise zunächst mit Cyanurchlorid bei einer Temperatur von 0 bis 20°C und anschließend mit der Naphthalinverbindung II bei einer Temperatur von 0 bis 40°C zur Reaktion bringen, wobei eine Bistriazinverbindung der Formel X 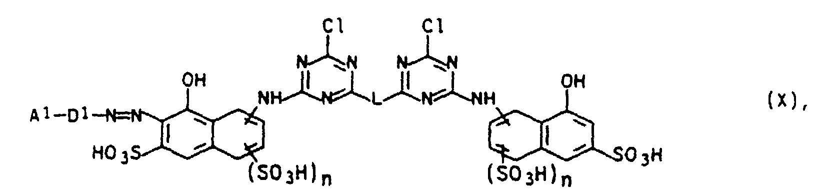 in der A¹, D¹, L und n jeweils die obengenannte Bedeutung besitzen, entsteht.

In der letzten Stufe erfolgt dann die Kupplung der Ditriazinverbindung X mit dem Diazoniumsalz eines Amins der Formel IIIb

A²-D²-NH₂ (IIIb),

in der A² und D² jeweils die obengenannte Bedeutung besitzen, wobei der Farbstoff der Formel Xl 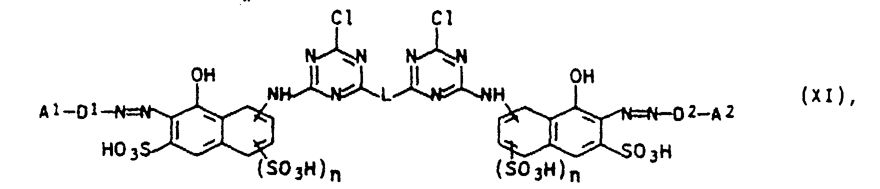 in der A¹, A², D¹, D², L und n jeweils die obengenannte Bedeutung besitzen, entsteht.

Die Synthese ues Farbstoffs XI ist auch in umgekehrter Reihenfolge möglich.

Die neuen Reaktivfarbstoffe der Formel I eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle.

Sie färben Baumwolle nach dem Foulard-Verfahren bei Raumtemperatur oder nach dem Ausziehverfahren bei einer Temperatur von 40 bis 60°C mit sehr hohem Fixiergrad und sehr hoher Farbstärke, wobei die Färbezeiten kurz sind.

Die folgenden Beispiele sollen die Erfindung näher erläutern.

### Beispiel 1

a) 30,3 g 4-(2-Sulfatoethylsulfonyl)anilin-Natriumsalz wurden in 500 ml Eiswasser gelöst und mit 30 ml wäßriger 3,33 N Natriumnitritlösung versetzt. Durch Zugabe von 30 ml 30 gew. -%iger Salzsäure und einstündiges Nachrühren bei 0 bis 5°C wurde diazotiert. Nachdem überschüssige salpetrige Säure mit Amidosulfonsäure zerstort wurde. vereinigte man die erhaltene Dispersion des Diazoniumsalzes mit der Lösung der 1-(4,6-Dichlor-1,3,5-triazin-2-yl) amino-8-hydroxynaphthalin-4,6-disulfonsäure, die inzwischen wie folgt bereitet wurde:
   Man ließ eine Lösung von 36,3 g 1-Amino-8-hydroxynaphthalin-4,6-disulfonsäure-Dinatnumsalz und 25 g Natriumformiat in 150 ml Wasser unter intensivem Rühren zu einer eiskalten Dispersion aus 18,5 g Cyanurchlorid. 0,1 g eines Netzmittels, 1 ml 30 gew.-%iger Salzsäure und 200 ml Eiswasser fließen und rührte zwei Stunden bei 5 bis 10°C und bei einem pH-Wert von 1 nach, bis die Umsetzung beendet war.
   Durch Pufferung mit Natriumacetatlösung (pH ca. 3) und 30-minütiges Nachrühren bei 10 bis 15°C wurde die Kupplungsreaktion zu Ende geführt.
   Der Dispersion des so erhaltenen Dichlortriazinylazofarbstoffes setzte man sodann 34,1 g 1-Amino-8-hydroxynaphthalin-3,6-disulfonsäure-Mononatriumsalz zu und stellte durch Einstreuen von Natriumhydrogencarbonat einen pH-Wert von 5 bis 5,5 ein, wobei die Temperatur auf 20°C anstieg. Nach zweistündigem Rühren bei 20 bis 25°C und Einhalten des obengenannten pH-Wertes war die Reaktion beendet und der Farbstoff der Formel 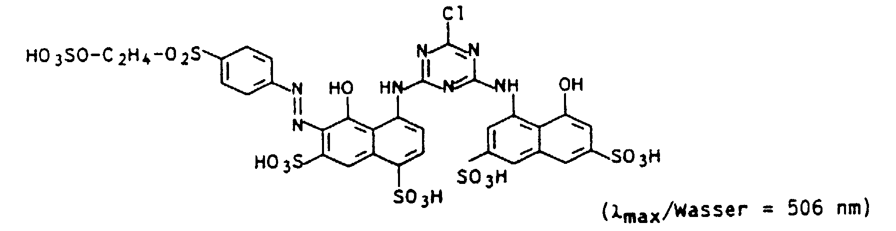 wurde mittels Kaliumchlorid vollständig ausgefällt, abgesaugt und mit 5 gew.-%iger Kaliumchloridlösung nachgewaschen.
b) 0,05 Mol des so erhaltenen kupplungsfähigen Farbstoffes, in 250 ml Wasser gelöst, wurden mit der äquivalenten Menge des Diazoniumsalzes von Anilin-2-sulfonsäure versetzt, das als Dispersion in wäßrig salzsaurem Milieu mit Natriumnitrit erhalten wurde. Pufferung mit Natriumacetat bis zu einem pH-Wert von ca. 5 und Rühren bei 20°C vervollständigten die Kupplungsreaktion. Der Farbstoff der Formel 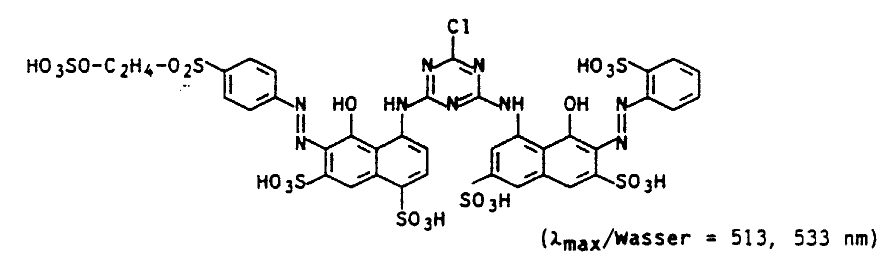 wurde als Kaliumsalz gefällt, abgesaugt mit 12 gew.-%iger Kaliumchloridlösung gewaschen und nach Auspressen bei 30°C unter vermindertem Druck getrocknet.
   Er färbt Cellulosematerialien nach dem Ausziehverfahren bei 40°C bis 60°C sowie nach dem Foulardverfahren bei Raumtemperatur (4 bis 8 Slurden Fixierzeit) in hoher Farbausbeute in gelbstichigem Rotton mit sehr guten Gebrauchsechtheiten.
c) Durch Synthese in umgekehrter Reihenfolge. d.h. Kupplung des Diazoniumsalzes der Anilin-2-sulfonsäure mit 1-(4,6-Dichlor-1,3,5-triazin-2-yl)amino-8-hydroxynaphthalin-3,6-disulfonsäure, Kondensation mit 1-Amino-6-hydroxynaphthalin-4,6-disulfonsaure und Kupplung des farbigen Monochlortriazins mit dem Diazoniumsalz von 4-(2-Sulfato-ethylsulfonyl)anilin unter den Bedingungen dieses Beispiels wurde ein identischer Farbstoff erhalten.

### Beispiel 2

Analog Beispiel 1 wurde durch jeweils wechselnden Gebrauch von 1 -Amino-8-hydroxynaphthalin-3,6-disulfonsäure und 1-Amino-8-hydroxynaphthalin-4,6-disulfonsäure der dem ersten Beispiel isomere Farbstoff der Formel 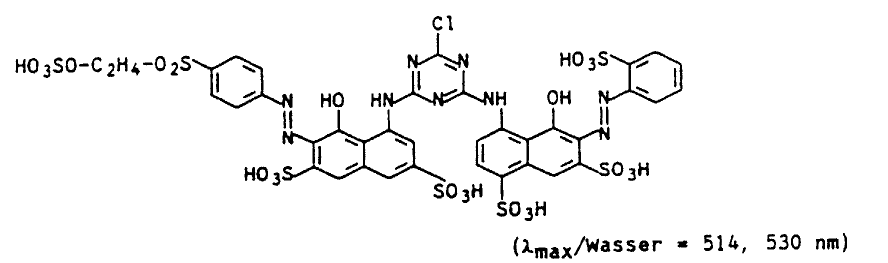 erhalten, der Cellulosematerialien in mittlerem Rotton färbt.

Analog Beispiel 1 und 2 werden die in der folgenden Tabelle 1 aufgeführten Farbstoffe erhalten, die sich hinsichtlich Reaktivität und Gebrauchseigenschaften vergleichbar verhalten. (Die Bezifferung der Reste K¹ und K² bezieht sich im folgenden jeweils auf die in der Beschreibung aufgeführten Formein IIa bis IIf.)

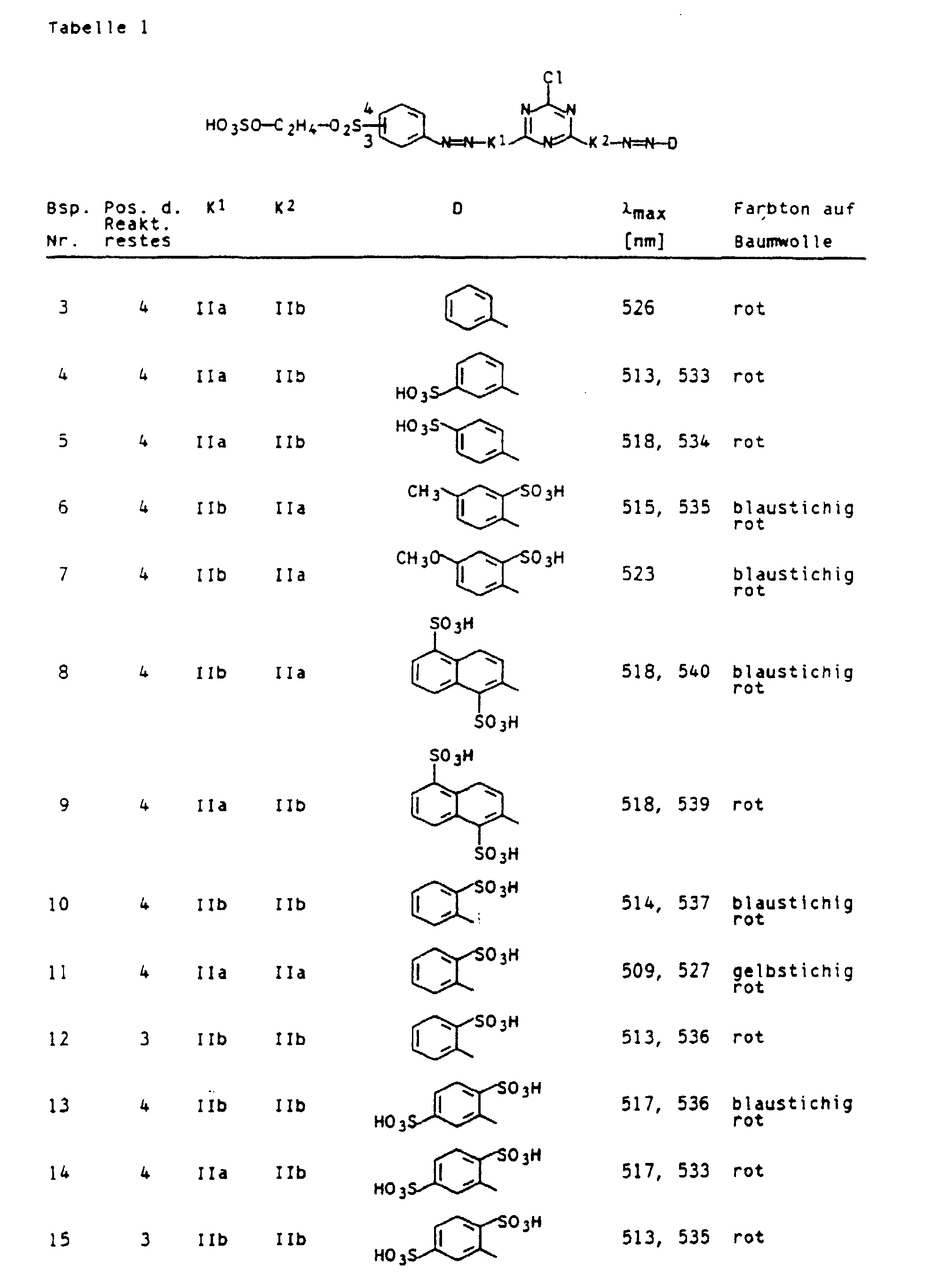

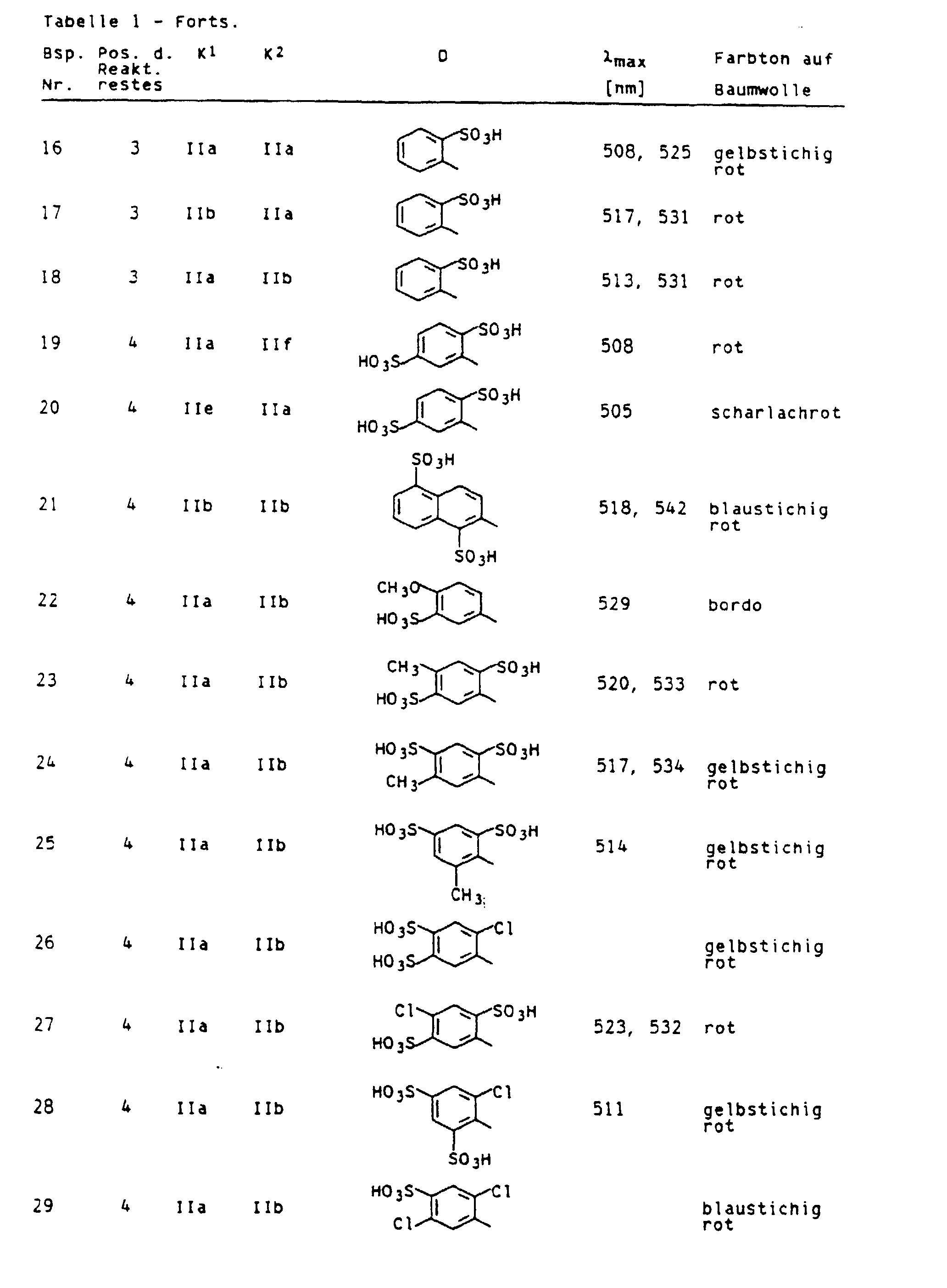

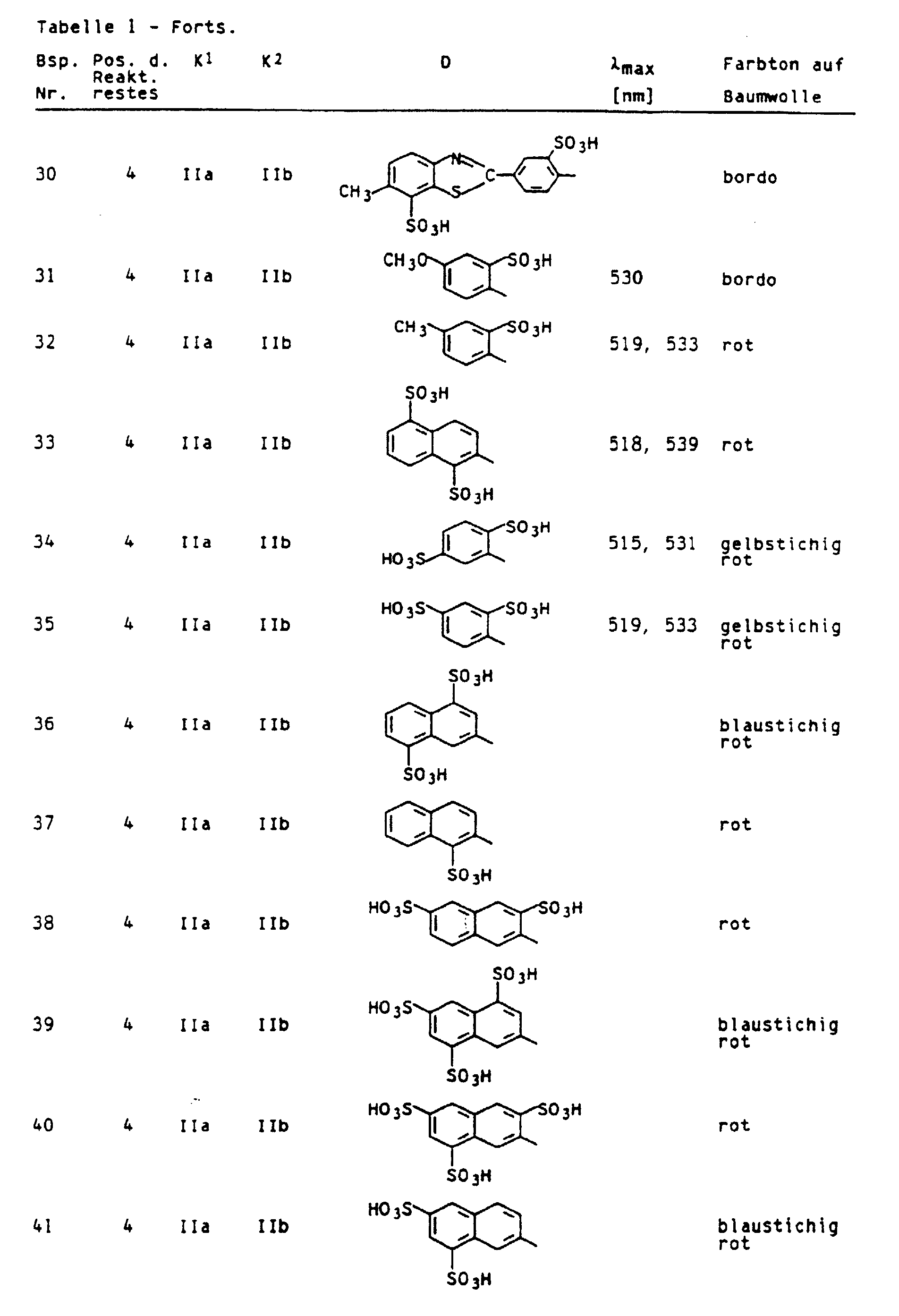

### Beispiel 42

8,65 g Anilin-2-sulfonsäure wurden in mineralsaurem Eiswasser mit Natriumnitrit diazotiert (Vol. ca. 140 ml) und mit 1-(2.6-Dichlor-1, 3,5-triazin-2-yl)amino-8-hydroxynaphihalin-3.6-disulfonsäure bei einem pH-Wert von 5 gekuppelt, wie in Beispiel Ia für die entsprechende 4,6-Disulfonsäure beschrieben.

Man kondensierte weiter mit 1-Amino-8-hydroxynaphthalin-4,6-disulfonsäure (bei pH 5 bis 5.5) und rührte über Nacht.

24,7 g 2-(4-Hydroxysulfonylphenyl)amino-4-(3-amino-4-hydroxysulfonyl-phenyl)amino-6-chlor-s-triazin-Mononatriumsalz wurden in 200 ml Wasser gelöst und mit 15 ml wäßriger 3,33 N Natriumnitritlösung versetzt. Durch Eingießen in 100 g Eis und 15 ml 30 gew.-%ige Salzsäure und einstündiges Rühren bei 10°C wurde diazotiert.

Nachdem der Überschuß an salpetriger Säure zerstört worden war, wurde die erhaltene gallertartige Flüssigkeit mit der oben erhaltenen. farbigen Monochlortriazinverbindung vereinigt und durch Pufferung mit Natriumacetat bis zu einem pH-Wert von 5 gekuppelt.

Der vollständig in Lösung befindliche Farbstoffe der Formel 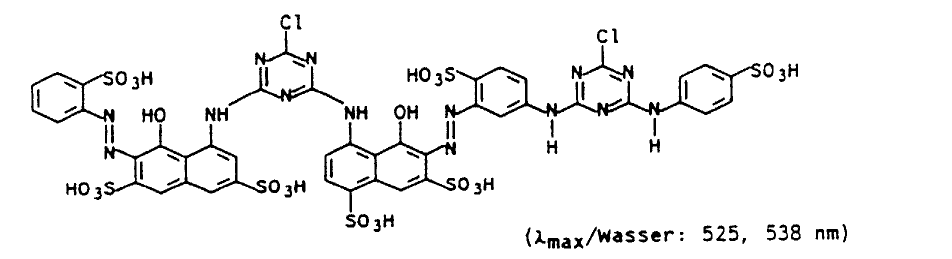 wurde als Natriumsalz gefällt, abgesaugt und das Nutschgut gründlich mit 12 gew.-%iger Natriumchloridlösung gewaschen. Die Trocknung des ausgepreßten Nutschgutes erfolgte bei 40°C unter verminderten Druck.

Der so erhaltene Farbstoff ist auf Cellulosematerialien nach dem Kaltverweilverfahren nach dem Ausziehverfahren bei 60°C und nach dem Klotzdämpf-Verfahren mit hoher Farbausbeute applizierbar und erzeugt einen mittleren Rotton mit sehr guten Gebrauchseigenschaften.

Analog den Beispielen 42 und 1a werden die in Tabelle 2 aufgeführten Farbstoffe erhalten. Sie weisen ein vergleichbares Eigenschaftsprofil auf.

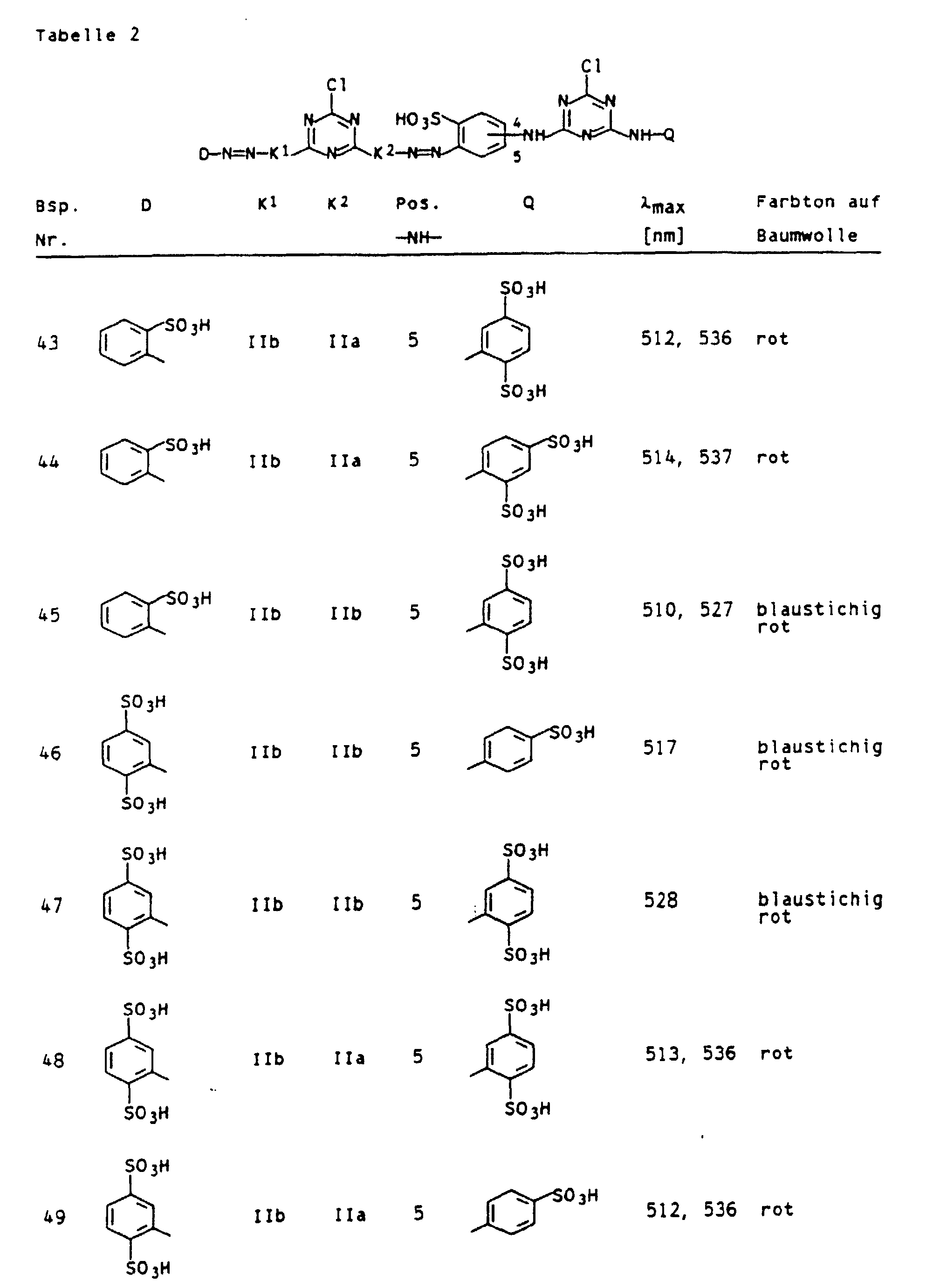

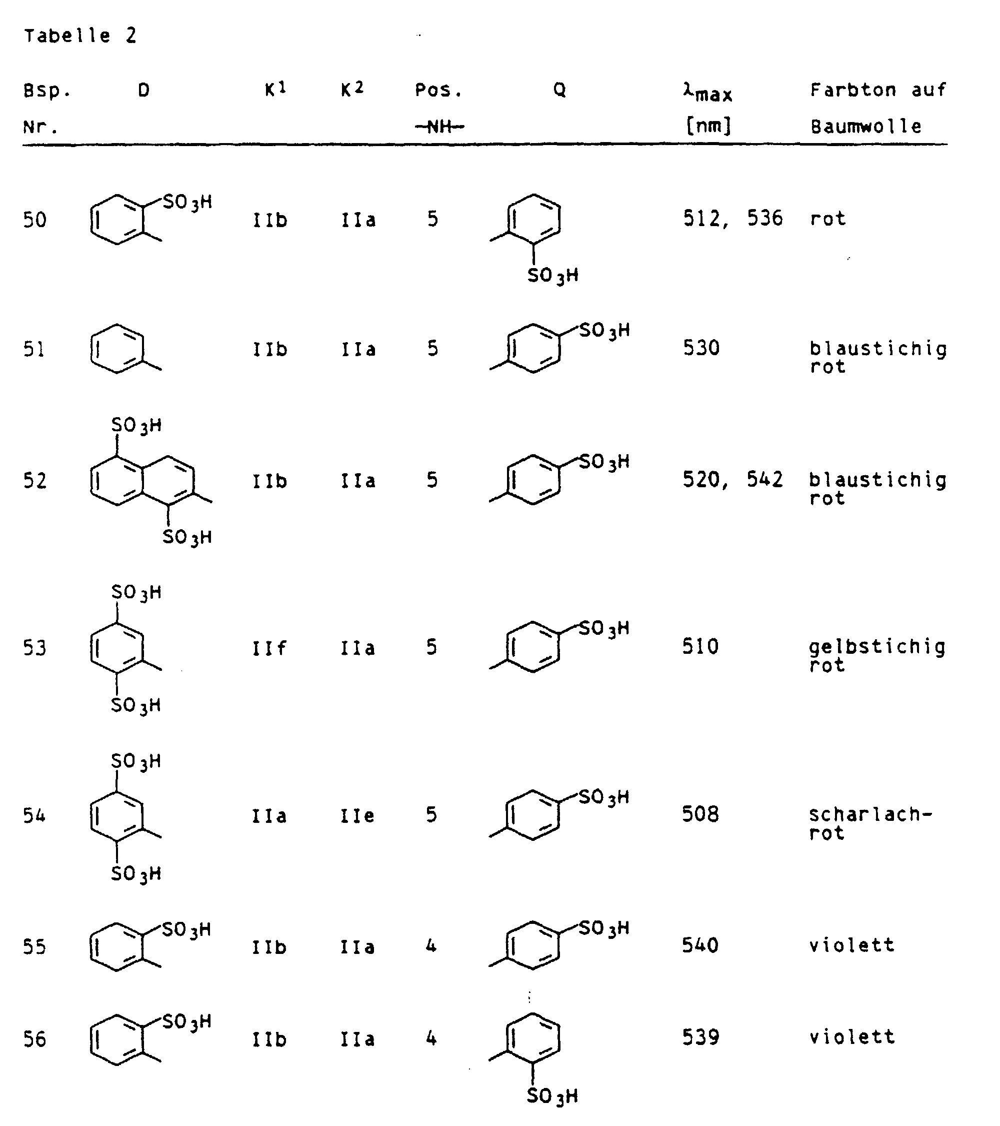

### Beispiel 57

Die in Beispiel 2 als Zwischenprodukt erhaltene Verbindung der Formel 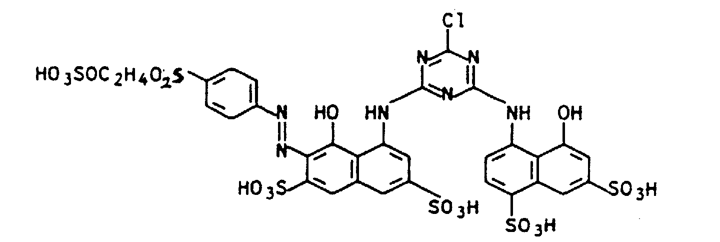 wurde mit dem Diazoniumsalz von 2-(4-Hydroxysulfonylphenyl)amino-4-(3-amino-4-hydroxysulfonylphenyl)amino-6-chlor-s-triazin (Beispiel 42) bei einem pH-Wert von 5,5 bis 6 gekuppelt. Der als Kaliumsalz gewonnene Farbstoff der Formel 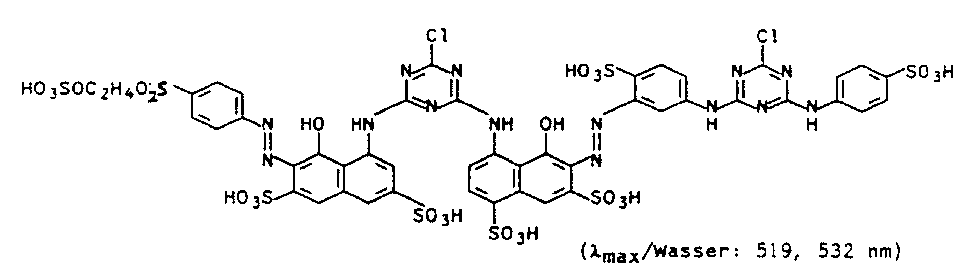 färbt Baumwollmaterialien im Ausziehverfahren und im Kaltverweilverfahren mit sehr hohen Fixierausbeuten in mittlerem Rotton.

In analoger Weise werden die in der folgenden Tabelle 3 aufgeführten Farbstoffe erhalten.

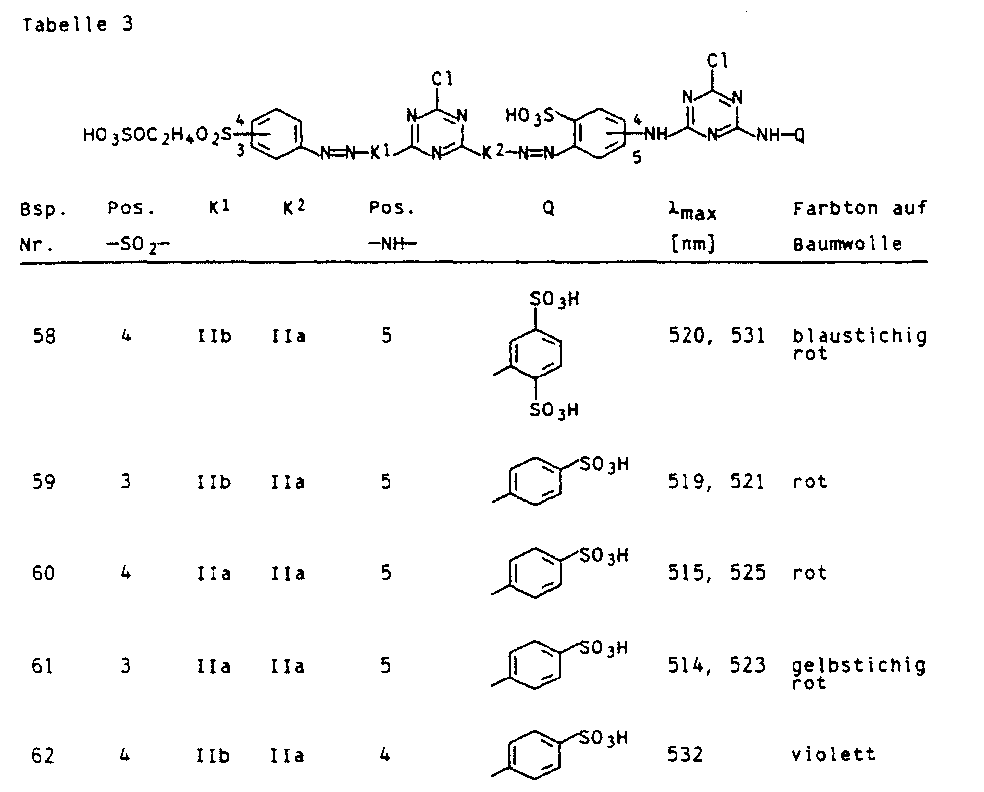

### Beispiel 63

0,05 Mol der in Beispiel 42 beschriebenen 1-(2,6-Dichlor-1,3,5-triazin-2-yl)amino-7-(2-hydroxysulfonylphenylazo) -8-hydroxynaphthalin-3,6-di-sulfonsäure wurden in wäßriger Lösung bei einem pH-Wert von 5 mit 9,5 g 3-Aminoanilin-4-sulfonsäure versetzt und mit Natriumhydrogencarbonat bei Raumtemperatur auf einen pH-Wert von 5 gepuffert Als nach dreistündigem Rühren unter diesen Bedingungen kein Dichlortriazin mehr nachgewiesen werden konnte, wurden 0.05 Mol der nach Beispiel 1 erhaltenen 1-(2.6-Dichlor-1,3,5-triazin-2-yl)amino-7-[4-(2-sulfatoethylsulfonyl)phenylazo]-8-hydroxynaphthalin-4,6-disulfonsäure als Reaktionsgemisch zugesetzt und unter Verwendung von Natriumacetat drei Stunden bei 35°C und einem pH-Wert von 5 gerührt. Nachdem das Monochlortriazin abreagiert hatte wurde der Farbstoff der Formel 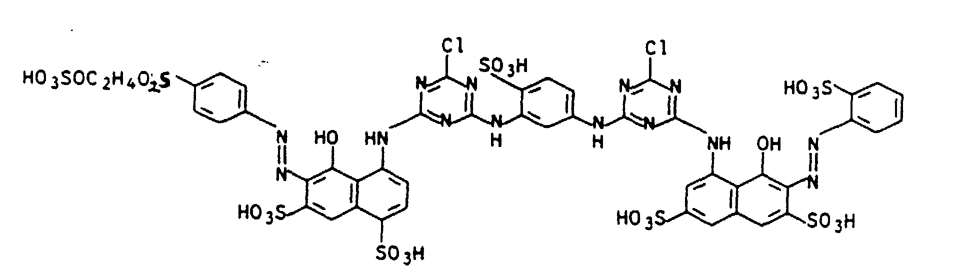 als Kaliumsalz gefällt, abgesaugt und mit 10 gew. -%iger Kaliumchloridlösung gut ausgewaschen. Der so erhaltene Farbstoff färbt Cellulosematerialien nach dem Ausziehverfahren bei 40 bis 60°C und nach dem Kaltverweilverfahren bei Raumtemperatur mit ausgezeichneter Farbausbeute in mittlerem Rotton.

Es ist auch möglich, die in Lösung befindliche Zwischenverbindung 1 -[6-Chlor-4-(3-amino-4-hydroxysulfonylphenyl) amino-1,3,5-triazin-2-yl]amino-7-(2-hydroxysulfonylphenylazo)-8-hydroxynaphthalin-3,6-disulfonsäure entweder bei 0 bis 10°C und einem pH-Wert von 5 mit Cyanurchlorid und anschließend bei einem pH-Wert von 5 und Raumtemperatur mit 1 -Amino-8-hydroxynaphthalin-4,6-disulfonsäure oder bei 35 bis 40°C und einem pH-Wert von 5 bis 5,5 mit 1-(4,6-Di-chlor-1,3,5-triazin-2-yl)amino-8-hydroxy-naphthalin-4,6-disulfonsäure umzusetzen. Die Fertigstellung erfolgt in beiden Fällen durch Kupplung mit dem Diazoniumsalz von 4-(2-Sulfatoethylsulfonyl)anilin bei einem pH-Wert von 3.

### Beispiel 64

Bei der umgekehrten Syntheseabfolge des Beispiels 63 wurde bei der weiteren Umsetzung von 1-[6-Chlor-4-(2-amino-4-hydroxysulfonylphenyl)amino-1,3,5-triazin-2-yl]amino-7-[4-(2-sulfatoethylsulfonyl)phenylazol-8-hydroxynaphthalin-4,6-disulfonsäure mit Cyanurchlorid, 1-Amino-8-hydroxynaphthalin-3,6-disulfonsäure und der Verbindung der Formel 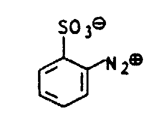 der dem Beispiel 63 isomere Farbstoff der Formel 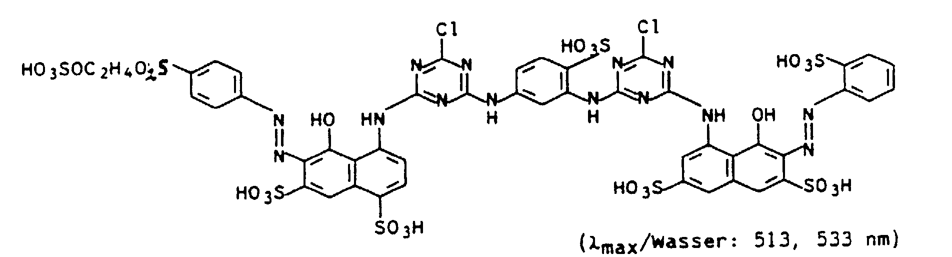 erhalten. Er weist vergleichbare Eigenschaften auf.

### Beispiel 65

49,1 g 1-[4-(2-Aminoethylamino)-6-chlor-1,3,5-triazin-2-yl]amino-8--hydroxynaphthalin-3,6-disulfonsäure (erhalten aus der entsprechenden Dichlortriazinyl-aminohydroxynaphthalinsulfonsäure und Ethylendiamin bei 40°C und pH 6) wurden mit 250 ml Wasser gemischt und bei einem pH-Wert von 4,5 bis 5 mit der äquimolaren Menge des Diazoniumsalzes von Anilin-2,5-disulfonsäure versetzt. Dieser Lösung setzte man 26 g Cyanurchlorid in acetonischer Lösung zu und rührte bei 20°C und einem pH-Wert von 6 über Nacht. Nach Zusatz von 33,5 g 1-Amino-8-hydroxynaphthalin-4,6-disulfonsäure und Rühren über Nacht bei Raumtemperatur und einem pH-Wert von 5 wurde die Lösung durch Filtration geklärt und die Verbindung der Formel 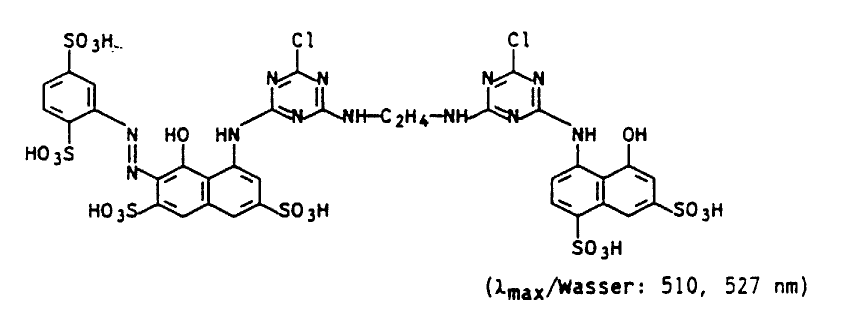 als Kaliumsalz gefällt und Isoliert.

0,05 Mol dieser Verbindung wurden in 250 ml Wasser gelöst und mit der äquivalenten Menge des Diazoniumsalzes von 4-(2-Sulfatoethylsulfonyl)-anilin (aus Beispiel 1) bei pH 3 gekuppelt.

Der als Kaliumsalz gefällte und isolierte Farbstoff der Formel 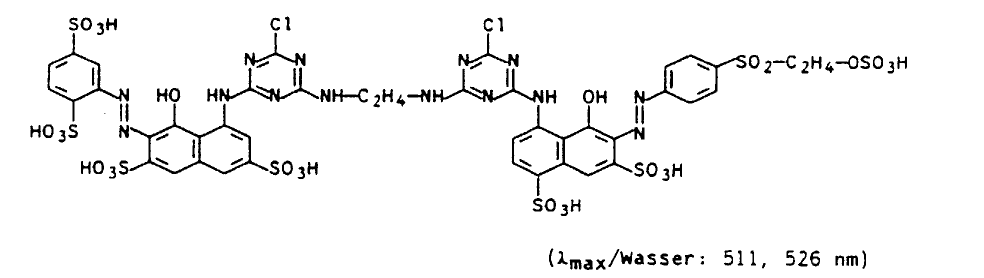 färbt Baumwollmaterialien nach dem Ausziehverfahren und nach dem Kaltverweilverfahren in mittlerem Rotton mit sehr hoher Farbausbeute und mit sehr guten Gebrauchsechtheiten.

## Patentansprüche

1. Reaktivfarbstoffe, die der Formel Ia 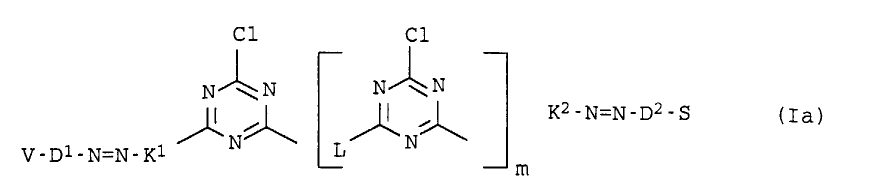 gehorchen, in der
m 0 oder 1,
V 2-Chlorethylsulfonyl oder einen 2-Hydroxyethylsulfonylrest, der mit anorganischen oder organischen Säuren verestert ist und unter Färbebedingungen den Vinylsulfonylrest ergibt, und
S einen substitutiv reagierenden faserreaktiven Rest bedeuten und
D¹ und D² gleich oder verschieden sind und unabhängig voneinander jeweils gegebenenfalls substituiertes Phenylen, gegebenenfalls substituiertes Phenylenmethyl, gegebenenfalls substituiertes Naphthylen oder gegebenenfalls substituiertes Naphthylenmethyl,
K¹ und K² gleich oder verschieden sind und unabhängig voneinander jeweils den Rest einer Kupplungskomponente aus der Aminonapthalinsulfonsäurereihe und
L ein Brückenglied bedeuten.

2. Reaktivfarbstoffe, die der Formel Ib 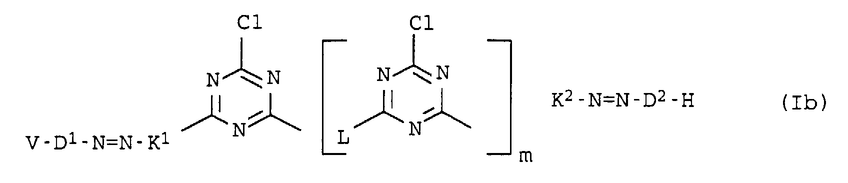 gehorchen, in der
V einen 2-Hydroxyethylsulfonylrest, der mit anorganischen oder organischen Säuren verestert ist und unter Färbebedingungen den Vinylsulfonylrest ergibt, bedeutet und
D¹, D², K¹, K², L und m jeweils die in Anspruch 1 genannte Bedeutung besitzen, mit der Maßgabe, daß der Farbstoff der Formel 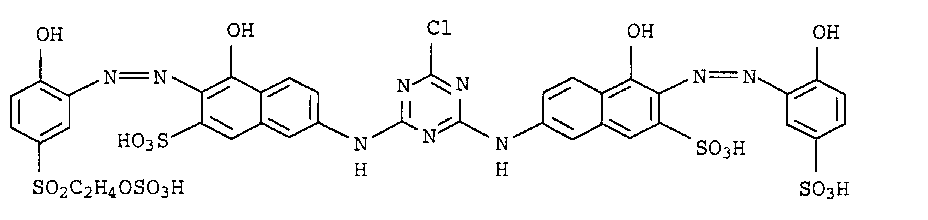 ausgenommen ist.

3. Reaktivfarbstoffe, die der Formel Ic 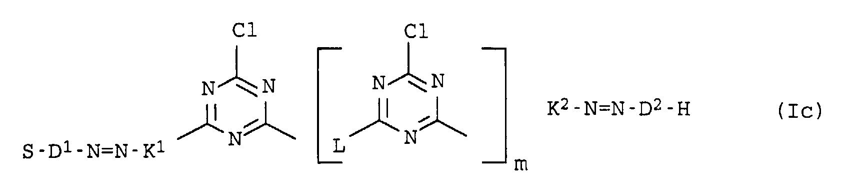 gehorchen, in der
S einen substitutiv reagierenden faserreaktiven Rest bedeutet und
D¹, D², K¹, K², L und m jeweils die in Anspruch 1 genannte Bedeutung besitzen.

4. Reaktivfarbstoffe nach Anspruch 1, 2 oder 3, dadurch gekennzeichnet, daß m 0 bedeutet.

5. Reaktivfarbstoffe nach Anspruch 1, 2 oder 3, dadurch gekennzeichnet, daß die Reste D¹ und D² unabhängig voneinander gegebenenfalls ein- oder zweifach durch Hydroxysulfonyl substituiertes Phenylen oder gegebenenfalls ein- bis dreifach durch Hydroxysulfonyl substituiertes Naphthylen bedeuten.

6. Verwendung der Reaktivfarbstoffe gemäß Anspruch 1, 2 oder 3 zum Färben oder Bedrucken von Hydroxygruppen oder Stickstoffatome aufweisenden organischen Substraten.

## Claims

1. A reactive dye which conforms to the formula Ia 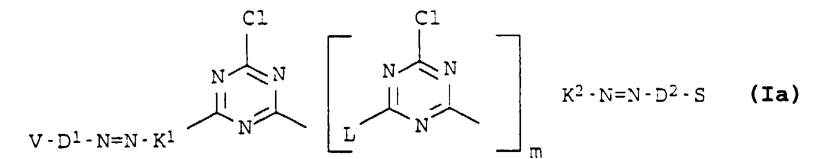 where
m is 0 or 1,
V is 2-chloroethylsulfonyl or a 2-hydroxyethylsulfonyl radical which has been esterified with an inorganic or organic acid and forms vinylsulfonyl under dyeing conditions,
S is a substitutively fiber-reactive radical, and
D¹ and D² are identical or different and each is independently of the other substituted or unsubstituted phenylene, substituted or unsubstituted phenylenemethyl, substituted or unsubstituted naphthylene or substituted or unsubstituted naphthylenemethyl,
K¹ and K² are identical or different and each is independently of the other the radical of a coupling component of the aminonaphthalenesulfonic acid series, and
L is a bridge member.

2. A reactive dye which conforms to the formula Ib 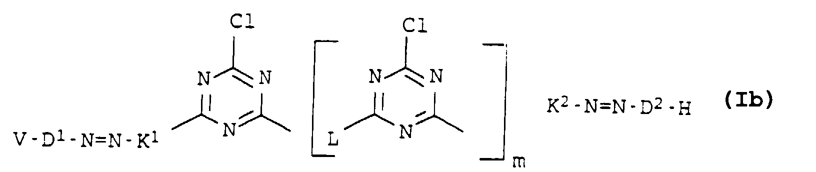 where
V is a 2-hydroxyethylsulfonyl radical which has been esterified with an inorganic or organic acid and forms vinylsulfonyl under dyeing conditions, and
D¹, D², K¹, K², L and m are each as defined in claim 1, with the proviso that the dye of the formula 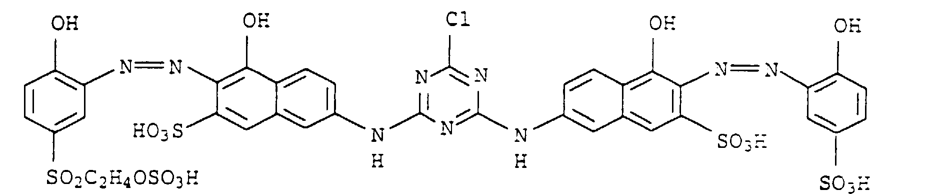 shall be excluded.

3. A reactive dye which conforms to the formula Ic 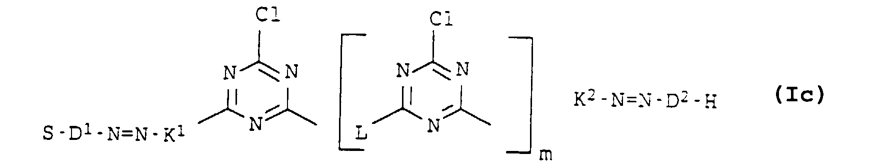 where
S is a substitutively fiber-reactive radical, and
D¹, D², K¹, K², L and m are each as defined in claim 1.

4. A reactive dye as claimed in claim 1, 2 or 3, wherein m is 0.

5. A reactive dye as claimed in claim 1, 2 or 3, wherein D¹ and D² are each independently of the other unsubstituted or hydroxysulfonyl-monosubstituted or - disubstituted phenylene or unsubstituted or hydroxysulfonyl-monosubstituted, -disubstituted or -trisubstituted naphthylene.

6. The use of a reactive dye as claimed in claim 1, 2 or 3, for dyeing or printing hydroxyl-containing or nitrogeneous organic substrates.

## Revendications

1. Colorants réactifs répondant à la formule la 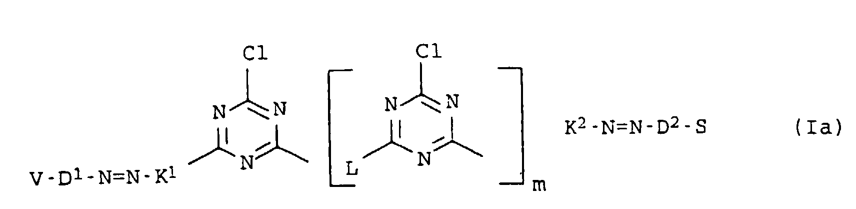 dans laquelle
m vaut 0 ou 1,
V représente un reste 2-chloréthylsulfonyle ou 2-hydroxyéthylsulfonyle, estérifié avec un acide organique ou inorganique et qui fournit un groupement vinylsulfonyle dans des conditions de teinture, et
S représente un groupement réactif vis à vis des fibres réagissant par substitution et
D¹ et D² sont identiques ou différents et représentent chacun indépendamment l'un de l'autre, un groupement phénylène éventuellement substitué, un groupement phényléne-méthyle éventuellement substitué, un groupement naphtylène éventuellement substitué ou un groupement naphtylène-méthyle éventuellement substitué,
K¹ et K² sont identiques ou différents et représentent chacun indépendamment l'un de l'autre le reste d'un composant de couplage issu de la série des acides aminonaphtalènesulfonique et
L représente un maillon pontant.

2. Colorants réactifs répondant à la formule Ib 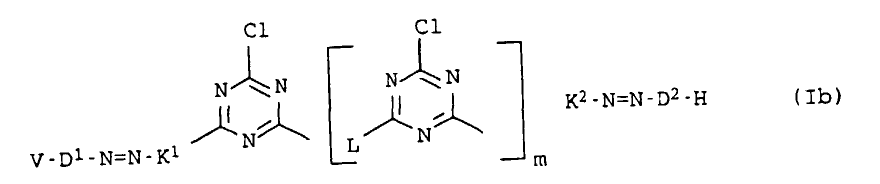 dans laquelle
V représente un reste 2-hydroxyéthylsulfonyle, estérifié avec un acide organique ou inorganique et qui fournit un groupement vinylsulfonyle dans des conditions de teinture, et
D¹, D², K¹, K², L et m prennent chacun la signification mentionnée dans la revendication 1, étant spécifié que le colorant de formule 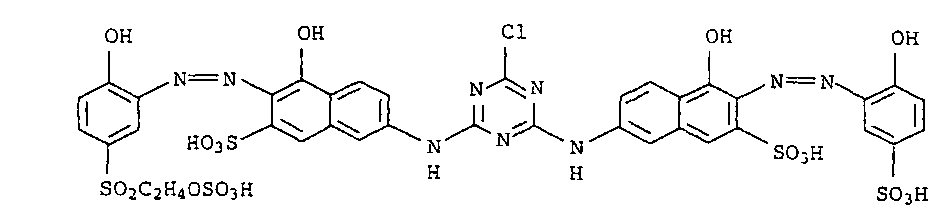 est exclu.

3. Colorants réactifs répondant à la formule Ic 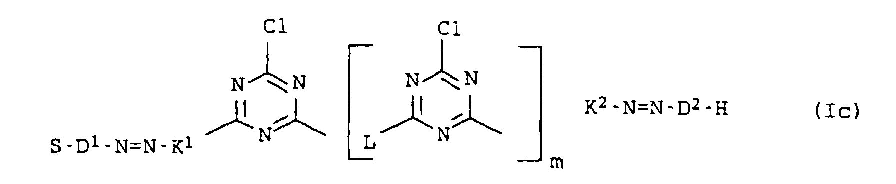 dans laquelle
S représente un reste réactif vis à vis des fibres réagissant par substitution et
D¹, D², K¹, K², L et m prennent chacun la signification mentionnée dans la revendication 1.

4. Colorant réactif selon la revendication 1, 2 ou 3, caractérisé en ce que m vaut 0.

5. Colorant réactif selon la revendication 1, 2 ou 3, caractérisé en ce que les restes D¹ et D² représentent chacun indépendamment l'un de l'autre, un groupement phénylène éventuellement substitué une à deux fois par un groupement hydroxysulfonyle ou un groupement naphtylène éventuellement substitué une à trois fois par un groupement hydroxysulfonyle.

6. Utilisation d'un colorant réactif selon la revendication 1, 2 ou 3, pour la coloration ou l'impression de substrats organiques comportant des atomes d'azote ou des groupements hydroxy.
